# EUROPÄISCHE PATENTSCHRIFT

(11) **EP 0 422 618 B1**
(45) Veröffentlichungstag und Bekanntmachung des Hinweises auf die Patenterteilung: **20.07.1994**
(21) Anmeldenummer: 90119425.8
(22) Anmeldetag: 10.10.1990
(51) Int. Cl.: C08B 37/00, A61K 31/715

(54) **Polysaccharide mit antiphlogistischer Wirkung, Verfahren zu ihrer Gewinnung und sie enthaltende Arzneimittel**
Polysaccharides with antiphlogistic activity, method for obtaining them and pharmaceutical compositions containing the same
Polysaccharides à activité antiphlogistique, procédé d'obtention et médicaments les contenant

(30) Priorität: 13.10.1989 DE 3934304
(43) Veröffentlichungstag der Anmeldung: 17.04.1991
(73) Patentinhaber: LOMAPHARM Rudolf Lohmann GmbH KG Pharmazeutische Fabrik, 31860 Emmerthal (DE)
(72) Erfinder: Wagner, Hildebert, Prof. Dr., W-8211 Breitbrunn/Chiemsee (DE); Ott, Holger, W-3254 Emmerthal 1 (DE)
(74) Vertreter: Sandmair, Kurt, Dr. Dr.

(56) Entgegenhaltungen:
- DE-A- 3 042 491
- ARZNEIMITTEL FORSCHUNG, Band 35, Juli 1985, Seiten 1069-1075, Editio Cantor, Verlag für Medizin und Naturwissenschaften GmbH, Aulendorf, DE; H. WAGNER et al.: "Immunstimulierend wirkende Polysaccharide (Heteroglykane) aus höheren Pflanzen"
- ARZNEIMITTEL FORSCHUNG, Band 34, Juni 1984, Seiten 659-661, Editio Cantor, Verlag für Medizin und Naturwissenschaften GmbH, Aulendorf, DE; H. WAGNER et al.: "Immunstimulierend wirkende Polysaccharide (Heteroglykane) aus höheren Pflanzen"

## Beschreibung

Die Erfindung betrifft neue Polysaccharide mit antiphlogistischer Wirkung, Verfahren zu ihrer Gewinnung und sie enthaltende Arzneimittel.

Das Komplementsystem, das im Serum und in Körperflüssigkeiten vorkommt, gehört zum unspezifischen, humoralen Teil der menschlichen Immunabwehr. Es besteht aus ca. 20 Proteinkomponenten und liegt normalerweise in einer nicht-aktiven, proenzymatischen Phase vor. Es erfüllt seine Aufgabe bei der Antigenverarbeitung dadurch, daß auf einen Reiz hin eine Reihe von Abwehrmaßnahmen in Gang gesetzt werden, wie z.B. Chemotaxis für polymorphkernige Leucocyten, Freisetzung von Histamin, Serotonin, lysosomalen Enzymen, Phagocytosesteigerung, Virusneutralisation, Abtötung eingedrungener Zellen und Beteiligung an der Initiierungsphase der Antikörperbildung.

Das menschliche Komplementsystem kann über den sogenannten klassischen oder über den alternativen Weg aktiviert werden. Die Aktivierung des klassischen Weges erfolgt im Rahmen einer spezifischen Immunreaktion, die des alternativen Weges z.B. über Bakterien, Viren, Parasiten oder bestimmte polyanionische Verbindungen (Polysaccharidstrukturen). In jedem Fall löst die Aktivierung des Komplementsystems eine Kaskade rasch aufeinanderfolgender enzymatischer Vorgänge aus.

Bei bestimmten Krankheiten, wie rheumatoider Arthritis, akuter Glomerulonephritis und systemischem Lupus erythematodes kommt es auf bisher nicht bekannte Weise zu einer überschießenden Reaktion des Komplementsystems mit Bildung von Immunkomplexen und verschiedenen Entzündungsfaktoren.

In der Behandlung der vorhin genannten Krankheiten werden bislang verschiedene Antiphlogistika und Antirheumatika eingesetzt. Dabei unterscheidet man zwischen nicht steroidalen Antiphlogistika, z.B. Verbindungen und Derivate der Salicylsäure, Indol- und Indenessigsaurederivate, wie z.B. Indometacin und den steroidalen Antiphlogistika, deren wichtigste Vertreter die Corticosteroide und ihre Derivate sind. Die antiphlogistische Wirkung beider Wirkstoffgruppen beruht auf ihrer Fähigkeit, bestimmte Enzyme, die bei der Bildung von Entzündungsmediatoren eine Rolle spielen, zu inhibieren.

Sowohl die steroidalen als auch die nicht-steroidalen Antiphlogistika sind mit einer Reihe schwerer und schwerster Nebenwirkungen behaftet. So führt z.B. die länger dauernde Verabreichung von Salicylsäurederivaten zu Magen- und Darmulceration. Ebenfalls bekannt ist die allgemeine Unverträglichkeit von Indometacin. Bei der Behandlung mit steroidalen Antiphlogistika ist gleichfalls mit einer Reihe von fatalen Nebenwirkungen, z.B. Ulcera duodeni oder -ventriculi, Myopathie, Osteoporosen, psychische Störungen, erhöhte Infektionsanfälligkeit und dgl. zu rechnen.

Bis heute kennt man jedoch keine entsprechende Verbindung auf dem Arzneimittelsektor, mit der eine Inhibierung des Komplementsystems erreichbar ist, die also in der Lage ist, ein Überschießen der Komplementreaktion mit den fatalen Folgen, zu verhindern.

Ausgehend von den Untersuchungen über Carrageenan (Davis, G.E. Immunology 6, 561 (1963) wurde die Wirkung verschiedener Polysaccharide auf das Komplementsystem untersucht H. Wagner et al, Zeitschrift f. Phytotherapie 8, 148 (1987); Yamada et al., Planta Medica, 163 (1984); Yamada et al. Planta Medica, 121 (1985), Yamada et al., Carbohydrate Res. 170, 181 (1987).

Weiterhin sind aus der DE-A-30 42 491 niedermolekulare Polysaccharide aus Pflanzen der Compositenfamilie bekannt, die immunstimulierende Eigenschaften bei gleichzeitiger entzündungshemmender Wirkung besitzen sollen. Das Molekulargewicht der beschriebenen Polysaccharide liegt im Bereich zwischen etwa 5 000 bis 50 000.

Der vorliegenden Erfindung liegt die Aufgabe zugrunde, neue Polysaccharide mit antikomplementärer und antiphlogistischer Wirkung, Verfahren zu ihrer Gewinnung und diese Polysaccharide enthaltende Arzneimittel zur Verfügung zu stellen.

Die erfindungsgemäßen Polysaccharide weisen folgende allgemeine Formeln auf: 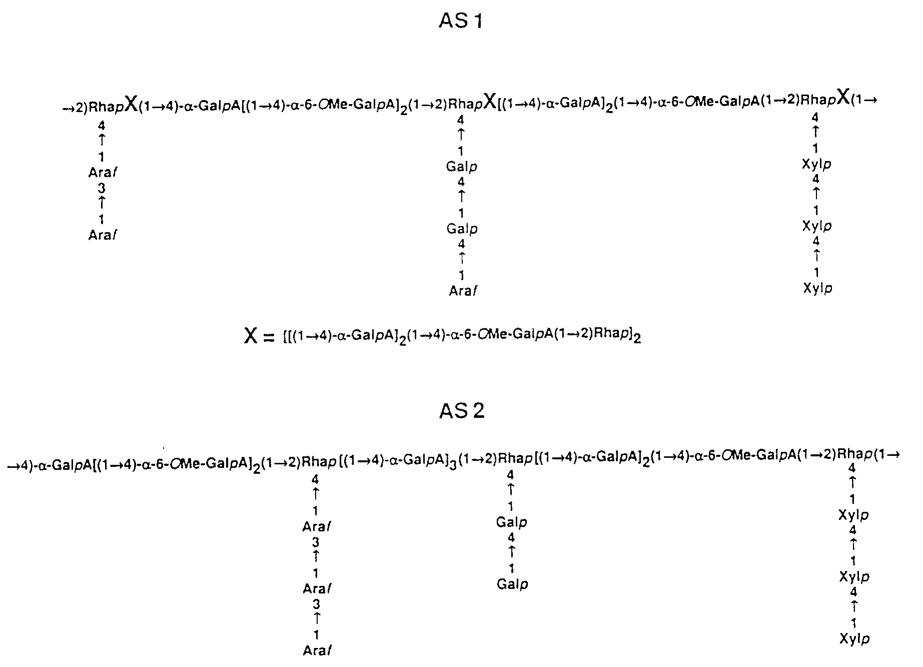
Bei den Polysacchariden AS 1 und AS 2 handelt es sich um Glykanogalakturonane, in denen etwa 50% der Galakturonsäuren von AS 1 und ca. 40% der sauren Gruppen von AS 2 mit Methanol verestert sind.

Die GC-MS-Ergebnisse der Permethylierungsanalysen zeigten, daß die Hauptketten aus (1→4)-alpha-verknüpften Galakturonsäuren und (1→2)-gebundenen Rhamnoseeinheiten bestehen, wobei ca. ein Drittel aller Rhamnosereste von AS 1, bzw. alle Rhamnosemoleküle von AS 2 Verzweigungsstellen zu unterschiedlich aufgebauten Seitenketten in Position C-4 aufweisen.

Die kurzen Seitenketten von AS 1 bestehen entweder aus (1→4)-verknüpften Galaktoseresten oder ebenso gebundenen Xylanketten, wobei speziell in AS 1 alle Galaktanketten und 50% der Xylanketten terminale Arabinosereste tragen. Gegebenenfalls können auch (1→3) gebundene Arabinoseketten vorhanden sein.

Es wurde auch gefunden, daß die erfindungsgemäßen Polysaccharide Schwermetalle, z.B. Mangan, Eisen, Nickel, Kobalt enthalten können. Das Molekulargewicht des Polysaccharids AS 1 wurde mit 6000 bis 8000 D, vorzugsweise etwa 7600 D, das des Polysaccharids AS 2 mit 13000 bis 17000 D, vorzugsweise 15000 D, in der HPLC-Gelpermeationschromatographie bestimmt.

Die antiphlogistische Wirkung der erfindungsgemäßen Polysaccharide wurde im Rattenpfotenödem-Test untersucht, wobei sie eine deutlich bessere Wirkung als Indometacin zeigten.

Da das Komplementsystem eng mit verschiedenen durch Immunkomplexe ausgelösten Entzündungsreaktionen assoziiert ist, können die erfindungsgemäßen Polysaccharide bei der Behandlung einer Reihe von bisher schwer oder nicht zu behandelnder Autoimmunerkrankungen, wie z.B. chronische Polyarthritis, Glomerulonephritis, systemischer Lupus erythematodes, extrinsische allergische Alveolitis oder der Serumkrankheit verwendet werden.

Die erfindungsgemäßen Polysaccharide werden aus den oberirdischen Teilen von Pflanzen der Gattung Achyrocline, bevorzugt aus Achyrocline saturoeioides, gewonnen. Achyrocline ist eine Compositae, die in Südamerika häufig vorkommt und deren Extrakte volksmedizinisch wie diejenigen der Kamille verwendet werden.

Das Verfahren zur Gewinnung der erfindungsgemäßen Polysaccharide besteht darin, daß man das getrocknete und pulverisierte Ausgangsmaterial mit einem organischen Lösungsmittel, vorzugsweise Petrolether und einem Alkohol, vorzugsweise Methanol, vorextrahiert und anschließend den Drogenrückstand mit Wasser im Verhältnis von 1 : 10 bis 1 : 30 mazerisiert. Anschließend engt man den überstand ein, dialysiert gegen entmineralisiertes H₂O und unterwirft das Material gegebenenfalls nach vorheriger Lyophilisation einer Anionenaustauschchromatographie, z.B. bzw. über DEAE-Sepharose® CL-6B, und isoliert die saure, rechtsdrehende Fraktion durch eine Salzgradientenelution.

Diese trennt man durch Gelfiltration, z.B. über Fraktogel® TSK HW-50 (S) weiter auf, wobei man 2 Fraktionen erhält und mit jeder Fraktion den Gelfiltrationsschritt wiederholt. Die nach dem letzten Schritt erhaltenen Polysaccharide können gegebenenfalls lyophilisiert werden.

### Beispiel

Isolierung der erfindungsgemäßen Polysaccharide aus den oberirdischen Teilen von Achyrocline satureioides.

Die getrocknete und pulverisierte Herbadroge wurde mit Petrolether and Methanol vorextrahiert und anschließend der Drogenrückstand mit Wasser im Verhältnis von 1 : 20 mazerisiert. Der Überstand wurde dann auf ein Fünftel seines Volumens einrotiert, gegen entmineralisiertes H₂O dialysiert (nominelle Trenngrenze der Dialysemembranen 10.000 D), gefriergetrocknet und anschließend einer Anionenaustauschchromatographie an DEAE-Sepharose® CL-6B unterzogen. Die Elution erfolgte mit einem 0 bis 1 mol/l NaCl-Gradienten, wobei bei einer NaCl Konzentration von ca. 0,3 mol/l eine saure rechtsdrehende Fraktion erhalten wurde. Diese wurde über Fraktogel® TSK HW-50 (S) Gel filtriert. Die beiden auftretenden Fraktionen wurden anschließend abermals an Fraktogel® TSK HW-50 (S) chromatographiert und so die beiden Polysaccharide AS 1 und AS 2 erhalten.

Die Struktur der erfindungsgemäßen Polysaccharide wurde durch Permethylierungsanalysen und Partialhydrolysen untersucht. Durch diese Untersuchungen wurden die Bindungsverhältnisse der erfindungsgemäßen Polysaccharide, wie in den oben angegebenen Formeln beschrieben, erhalten.

Durch den Carbazoltest (Bitter, T. et al., Analyt. Biochem. 4, 330, (1962)) wurde der Galakturonsäuregehalt der erfindungsgemäßen Polysaccharide zu jeweils ca. 65% ermittelt.

Mit dem von Wood et al., (Wood et al., Analytical Biochemistry 39, 418 (1971)) beschriebenen Verfahren wurde die Veresterung mit Methanol untersucht und gefunden, daß AS 1 zu ca. 50% und AS 2 zu ca. 40% methanolverestert vorliegen.

Zur weiteren Analyse der Polysaccharide wurde zunächst deren Molekulargewicht bestimmt.

Die Molekulargewichtsbestimmung wurde mit der HP-Gelpermeationschromatographie durchgeführt. Dabei gelangte bei AS 1 nur die Säule »-Porasil GPC 60 zum Einsatz, während bei AS 2 eine Kombination aus nach steigendem Ausschlußvolumen in Reihe geschalteter »-Porasil GPC 60 und »-Bondagel E-125 verwendet wurde. Die Systeme wurden bei AS 1 (Trennbereich: 100 D bis 10.000 D) mit Maltotriose, Maltoheptaose, Dextransulfat 5000, den Dextranen 10T und 40T sowie Glucose geeicht, während bei AS 2 (Trennbereich: 100 D bis 50.000 D) eine Eichung mit Glucose und den Dextranen 10T, 40T, 70T und 110T stattfand. Als Puffersystem wurde ein 0,2 mol/l Natriumphosphatpuffer mit einem pH-Wert von 6,0 verwendet.

Mit diesem Verfahren wurde das Molekulargewicht des erfindungsgemäßen Polysaccharids AS 1 mit 6.000 bis 8.000 D, bevorzugt mit ca. 7.600 D, das des erfindungsgemäßen Polysaccharids AS 2 mit 13.000 bis 17.000 D, bevorzugt 15.000, gefunden. Es ist in diesem Zusammenhang darauf hinzuweisen, daß das Molekulargewicht in Abhängigkeit der angewandten Untersuchungsmethoden variieren kann.

Zur Bestimmung der Zusammensetzung der erfindungsgemäßen Polysaccharide wurden diese mit 2 mol/l TFA versetzt und 2 Stunden lang bei 121 °C im Trockenschrank erhitzt. Nach der Entfernung von TFA wurde eine Dünnschichtchromatographie durchgeführt.

Adsorbens: Kieselgel, G F 254 Fertigplatten für die Nano-DC, HPTLC 20 x 20 cm, (Firma Merck).

Laufmittelsystem: n-Butanol-Aceton-Essigsäure-Wasser (35:35 : 10:20)
Detektion: Anilindiphenylaminophosphorsäure
Das Ergebnis bestätigte die in anderen Untersuchungen gefundene Zusammensetzung der erfindungsgemäßen Polysaccharide.

Zuckeranalysen: Die Bestimmung der molaren Zusammensetzung der Neutralzuckeranteile erfolgte nach Totalhydrolyse des Polysaccharids mit zweimolarer Trifluoressigsäure, anschließende Reduktion der Monosaccharide und Überführung zu den Alditolacetaten gaschromatographisch (Blakeney et al., Carbohydrate Research 113, 291 (1983)).

Die Ergebnisse zeigt die folgende Tabelle:

| Zuckeranalysen: | AS 1 | AS 2 |
|---|---|---|
| Molare Zuckerzusammensetzung: | | |
| Rhamnose | 1,02 | 1,08 |
| Arabinose | 1,0 | 1,0 |
| Xylose | 0,31 | 1,09 |
| Galaktose | 0,83 | 1,64 |

Die alpha (1→4) Verknüpfung der Galakturonsäure wurde zusätzlich mit Pectinase untersucht. Das Polysaccharid wurde in destilliertem Wasser gelöst und mit Pectinase 3 Stunden bei Raumtemperatur inkubiert.

Anschließend wurde mittels Dünnschichtchromatographie die freigesetzte Galacturonsäure nachgewiesen.

Die pharmakologische Wirkung der erfindungsgemäßen Polysaccharide wurde in anerkannten in-vivo und in-vitro Tests untersucht.

### 1. Antikomplementäre Aktivität:

Der Test auf antikomplementäre Aktivität erfolgte nach der von Yamada beschriebenen Methode (Yamada et al., Planta med. 163 - 167 (1984)).

Die Ergebnisse sind in der folgenden Tabelle gezeigt.

### Antikomplementäre Aktivität (Reduktion der Hämolyse in %):

| | | AS 1 | AS 2 |
|---|---|---|---|
| Klassischer Weg: | 1000 »g/ml | 91,9±0,5 | 97,1±0,5 |
| | 100 »g/ml | 35,4±12,2 | 93,1±0,4 |
| | 10 »g/ml | 31,2±13,5 | 38,1±9,6 |
| Alternativer Weg: | 1000 »g/ml | 70,2±3,3 | 87,3±0,5 |
| | 100 »g/ml | 52,3±6,2 | 69,6±18,2 |
| | 10 »g/ml | 22,5±5,9 | 24,3±5,5 |

Wie aus der Tabelle ersichtlich ist, zeigen beide Polysaccharide AS 1 und AS 2 eine sehr starke antikomplementäre Wirkung auf beide Komplementwege.

### Antiphlogistische Wirkung:

Die antiphlogistische Wirkung der erfindungsgemäßen Polysaccharide wurde im Carrageenan induzierten Rattenpfotenödemtest untersucht (Winter, C.A. et al., Proc. Soc. Exp. Biol. Med. 111, 544 (1962)).

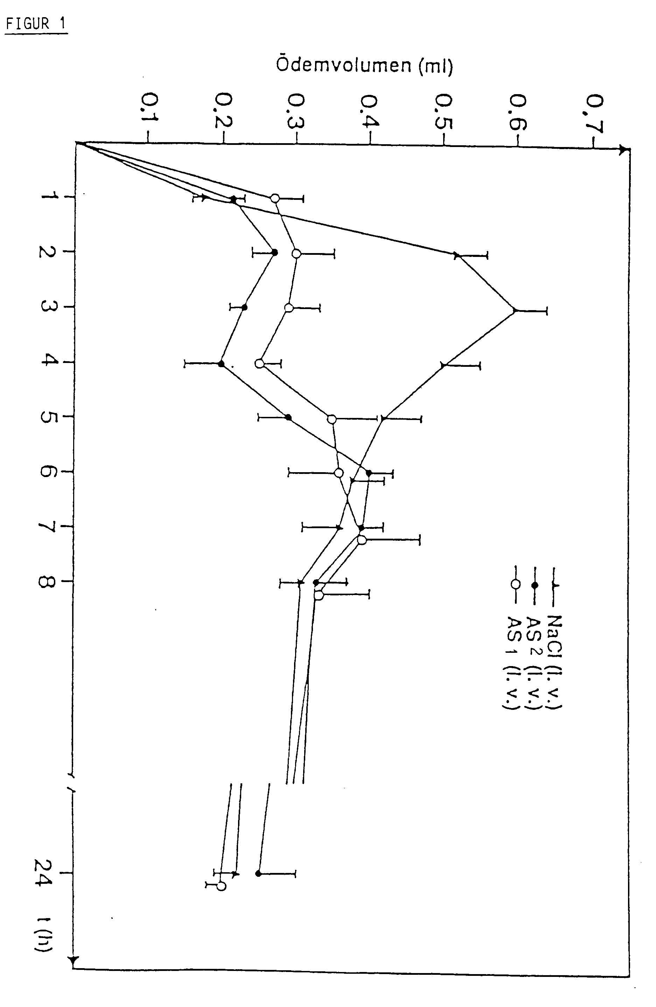

Die Ergebnisse der Hemmung des Ödems durch die erfindungsgemäßen Polysaccharide sind in Fig. 1 gezeigt.

Daraus ersieht man, daß besonders in den ersten 4 bis 5 Stunden nach Verabreichung der Polysaccharide die Ödemhemmung besonders stark ist.

Das im Vergleich dazu eingesetzte bekannte Antiphlogistikum Indometacin bewirkte dagegen erst bei einer 3-fach höheren Konzentration, 10 mg anstelle von 3 mg/kg i.v., 8 Stunden nach Applikation eine mit AS 1 vergleichbare Reduktion, wogegen die Hemmung mit AS 2 nach wie vor deutlich besser als die durch die Vergleichssubstanz Indometacin war (vgl. die nachfolgende Tabelle).

### Hemmung des Rattenpfotenödems nach 8 Stunden:

| | AS 1 | AS 2 |
|---|---|---|
| 3 mg/kg i.v. | 23,5 % | 33,1% |
| Indometacin 10 mg/kg i.v. 22,9% | | |

Die Ergebnisse der vorstehenden Tabelle und Fig. 1 zeigen die sehr gute antiphlogistische Aktivität der erfindungsgemäßen Polysaccharide, die um das ca. 3-fache höher ist, als die des bekannten Antiphlogistikums Indometacin.

Aufgrund der sehr guten Aktivität von AS 1 und AS 2 in beiden Komplementtests und den hervorragenden Resultaten dieser Polysaccharide im Rattenpfotenödemtest, die ihre maximale Aktivität in einem Zeitraum von 1 bis 4 Stunden nach der Carrageenaninjektion entfalten, läßt sich ein direkter Zusammenhang herstellen, der die antiphlogistische Wirkung der Polysaccharide AS 1 und AS 2 auf deren antikomplenentäre Eigenschaft zurückführt.

Aufgrund der vorstehend gezeigten Ergebnisse kann davon ausgegangen werden, daß die erfindungsgemäßen Polysaccharide im Gegensatz zu den bekannten Antiphlogistika wegen der gezeigten antikomplementären Wirkung kausal in der Behandlung verschiedener, auf einem Überschießen der Komplementreaktion beruhenden Krankheitszuständen, eingesetzt werden können. Sie wirken daher kausal und nicht symptomatisch.

Wegen dieser ausgezeichneten Eigenschaften können die erfindungsgemäßen Polysaccharide insbesondere zur Behandlung von mit Immunkomplexen einhergehenden entzündlichen Zuständen wie rheumatoider Arthritis, akuter Glomerulonephritis oder systemischem Lupus erythematodes verwendet werden.

Die erfindungsgemäßen Polysaccharide können entweder getrennt als Reinsubstanz oder in Form von pharmazeutischen Zübereitungen verabreicht werden, wenngleich es im allgemeinen wirksamer ist, die Verbindung in Form einer pharmazeutischen Zübereitung zu verabreichen. Vorzugsweise liegt die Zubereitung in Form einer Formulierung vor, die
(1) ein erfindungsgemäßes Polysaccharid enthält und
(2) eines oder mehrere geeignete Bindemittel, Trägermaterialien und/oder weitere Hilfsstoffe und
(3) gegebenenfalls weitere therapeutische Wirkstoffe oder Adjuvantien aufweist.

Die Trägermaterialien, Bindemittel und/oder Hilfsstoffe müssen pharmazeutisch und pharmakologisch verträglich sein, so daß sie mit den anderen Bestandteilen der Zübereitung vereinbar sind und keine nachteilige Wirkung auf den behandelten Organismus ausüben.

Die Formulierungen schließen jene ein, die für die parenterale (einschließlich subkutane, intradermale, intramuskuläre und intravenöse) oder orale Verabreichung geeignet sind, wenngleich der am besten geeignete Verabreichungsweg von dem Zustand des Patienten abhängt.

Die Herstellung der Formulierungen erfolgt unter Anwendung von an sich auf dem Gebiet der Pharmazie bekannten Methoden. Alle Methoden schließen den Schritt ein, ein erfindungsgemäßen Polysaccharid (d.h. den Wirkstoff) mit dem Trägermaterial, Bindemittel und/oder Hilfsstoffe, wobei letztere einen zusätzlichen Bestandteil darstellen, zu vermischen bzw. zu vereinigen. Im allgemeinen werden die Formulierungen dadurch hergestellt, daß man den Wirkstoff mit den flüssigen Trägermaterialien oder den feinteiligen Trägermaterialien oder beiden innig vermischt und dann erforderlichenfalls das erhaltene Produkt in die gewünschte Verabreichungsform bringt. Die erfindungsgemäßen Formulierungen, die für die orale Verabreichung geeignet sind, können in Form von diskreten Einheiten) wie Kapseln, Cachets oder Tabletten, die jeweils eine vorbestimmte Menge des erfindungsgemäßen Wirkstoffes enthalten, sowie in Form von Pulvern oder Granulaten, in Form einer Lösung oder einer Suspension, in einer wässrigen oder nicht wässrigen Flüssigkeit, oder in Form einer Emulsion, zum Beispiel in Form von Liposomen, vorliegen.

Der Wirkstoff kann auch in Form eines Bolus oder einer Paste vorliegen.

Die Tabletten kann man durch Pressen oder Vergießen herstellen, wobei man gegebenenfalls eines oder mehrere der üblichen Hilfsmittel zugibt.

Die für die parenterale Verabreichung geeigneten Formulierungen schließen sterile Injektionslösungen in wässrigen oder nicht wässrigen Medien, die Antioxidantien, Puffer, Bakteriostatika und gelöste Materialien, die die Formulierung im Hinblick auf den menschlichen Organismus isotonisch machen, ein. Weiter können die erfindungsgemäßen Polysaccharide in Form von sterilen Suspensionen in wässrigen oder nicht wässrigen Medien, die Suspensionsmittel und Verdickungsmittel enthalten können, vorliegen. Die Formulierungen können als Einzel- oder Mehrfach-Dosis vorliegen, beispielsweise in Form von Ampullen oder dicht verschlossenen Fläschchen und können auch in lyophilisierter Form gelagert werden, so daß es lediglich erforderlich ist, bei notwendiger Verabreichung steriles flüssiges Trägermaterial, beispielsweise für Injektionszwecke geeignetes Wasser, unmittelbar vor Verwendung zuzugeben. Die unmittelbar vor der Verabreichung bereiteten Injektionslösungen und Suspensionen können aus sterilen Pulvern, Granulaten und Tabletten der oben beschriebenen Art bereitet werden.

Die erfindungsgemäßen Zübereitungen können neben den vorhin genannten Bestandteilen andere für die in Rede stehenden Formulierungen geeignete Bestandteile enthalten. So können beispielsweise die auf oralem Weg zu verabreichenden pharmazeutischen Zübereitungen Aromastoffe enthalten.

Die zur Applikation geeigneten Mengen des Wirkstoffes variieren in Abhängigkeit vom jeweiligen Therapiegebiet. Im allgemeinen enthält eine Einzeldosis 1 bis 99% aktiven Bestandteil. Dies entspricht bei einer einmaligen Applikation zum Beispiel 50 »g bis 100 mg pro Dosis/Mensch parenteral und 1 mg bis 500 mg peroral. Diese Dosierung kann jedoch in Abhängigkeit des Verabreichungsweges, des Patientenzustandes und des Therapiegebietes in breiten Grenzen variieren.

## Patentansprüche

1. Polysaccarid der allgemeinen Formel: 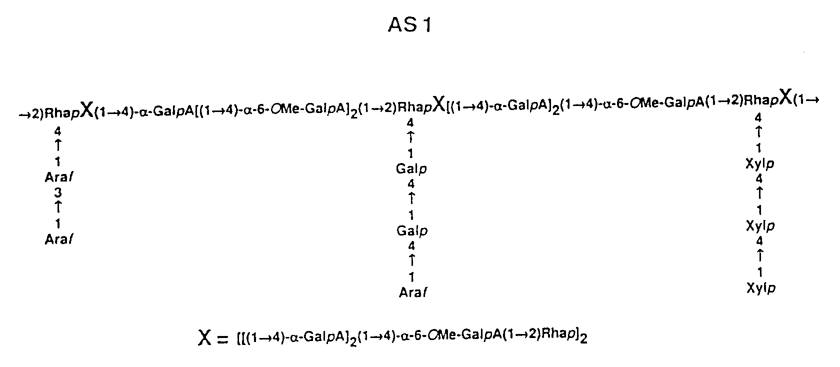 mit einem durchschnittlichen Molekulargewicht von 6.000 D bis 8.000 D, bestimmt in der HP-Gelpermeationschromatographie, in dem ca. 50% der Galakturonsäuren mit Methanol verestert vorliegen und in dem 50% der Xylanketten terminale Arabinosereste tragen.

2. Polysaccharid der allgemeinen Formel: 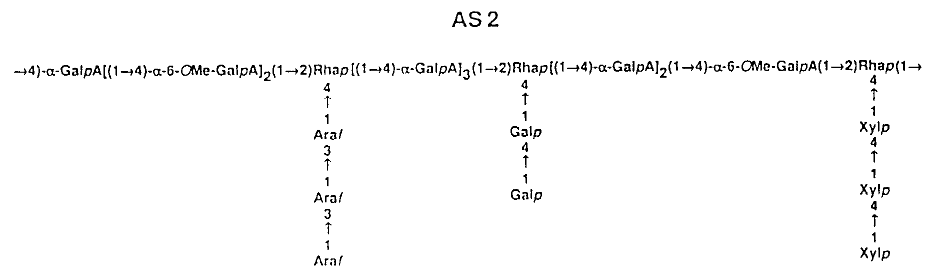 mit einem durchschnittlichen Molekulargewicht von 13.000 D bis 17.000 D, bestimmt in der HP-Gelpermeationschromatographie, und in dem ca. 40% der sauren Gruppen mit Methanol verestert vorliegen.

3. Polysaccharid nach einem der Ansprüche 1 oder 2, **dadurch gekennzeichnet,** daß es aus Pflanzen der Gattung Achyrocline, bevorzugt Achyrocline satureioides, erhalten wurde.

4. Pharmazeutische Zubereitung enthaltend ein Polysaccharid nach Anspruch 1 oder 2 in Verbindung mit üblichen bekannten Träger- und Hilfsstoffen.

5. Verfahren zur Gewinnung eines Polysaccharides nach einem der Ansprüche 1 oder 2, **dadurch gekennzeichnet,** daß man:
a) getrocknete Teile von Pflanzen der Gattung Achyrocline, bevorzugt Achyrocline sat. mit einem organischen Lösungsmittel vorextrahiert,
b) den Drogenrückstand in Wasser mazerisiert, den überstand gegen H₂O dialysiert und anschließend
c) einer Anionenaustauschchromatographie unterzieht, wobei man durch Salzgradientenelution eine saure, rechtsdrehende Fraktion eluiert, die man mittels Gelchromatographie in die erfindungsgemäßen Polysaccharide auftrennt.

6. Verfahren nach Anspruch 5, bei dem man in Stufe a) Petrolether und Methanol verwendet.

7. Verfahren nach Anspruch 5, bei dem man zur Elution in der Anionenaustauschchromatographie einen 0 bis 1 mol/l NaCl Gradienten verwendet und die saure, rechtsdrehende Fraktion bei einer NaCl Konzentration von ca. 0,3 mol/l NaCl eluiert.

## Claims

1. Polysaccharide of the general formula: 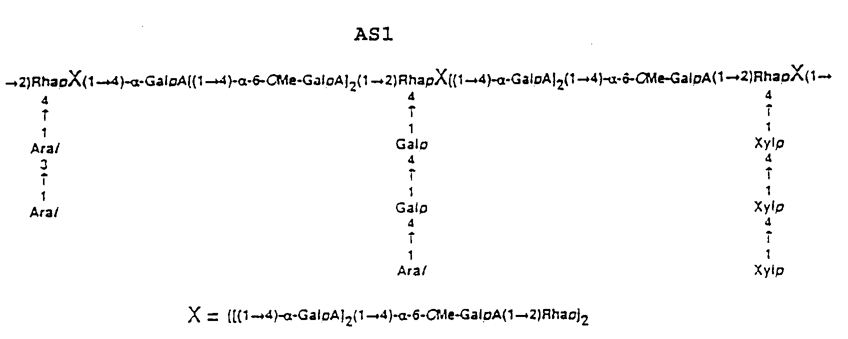 having an average molecular weight of 6,000 D to 8,000 D, determined in HP gel permeation chromatography, in which about 50% of the galacturonic acids are esterified with methanol and in which 50% of the xylan chains carry terminal arabinose radicals.

2. Polysaccharide of the general formula: 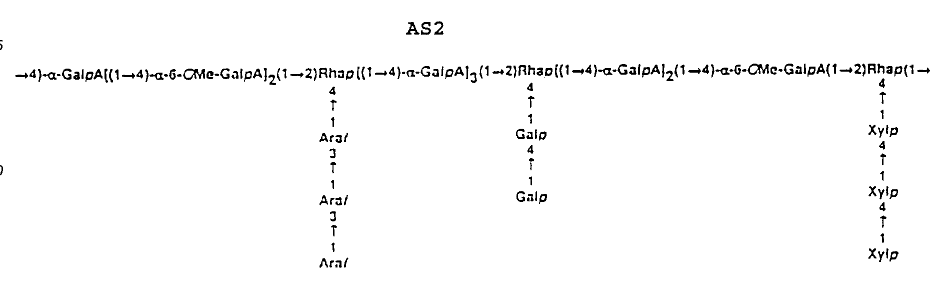 having an average molecular weight of 13,000 D to 17,000 D, determined in HP gel permeation chromatography, and in which about 40% of the acidic groups are esterified with methanol.

3. Polysaccharide according to one of Claims 1 and 2, characterized in that it was obtained from plants of the genus Achyrocline, preferably Achyrocline satureioides.

4. Pharmaceutical preparation containing a polysaccharide according to Claim 1 or 2 in combination with customary known excipients and auxiliaries.

5. Process for obtaining a polysaccharide according to one of Claims 1 and 2, characterized in that:
a) dried parts of plants of the genus Achyrocline, preferably Achyrocline sat., are pre-extracted with an organic solvent,
b) the drug residue is macerated in water, the supernatant is dialysed against H₂O and then
c) subjected to anion exchange chromatography, by means of salt gradient elution an acidic, dextrorotatory fraction being eluted which is separated into the polysaccharides according to the invention by means of gel chromatography.

6. Process according to Claim 5, in which petroleum ether and methanol are used in stage a).

7. Process according to Claim 5, in which a 0 to 1 mol/l NaCl gradient is used for elution in anion exchange chromatography and the acidic, dextrorotatory fraction is eluted at an NaCl concentration of about 0.3 mol/l of NaCl.

## Revendications

1. Polysaccharide répondant à la formule générale : 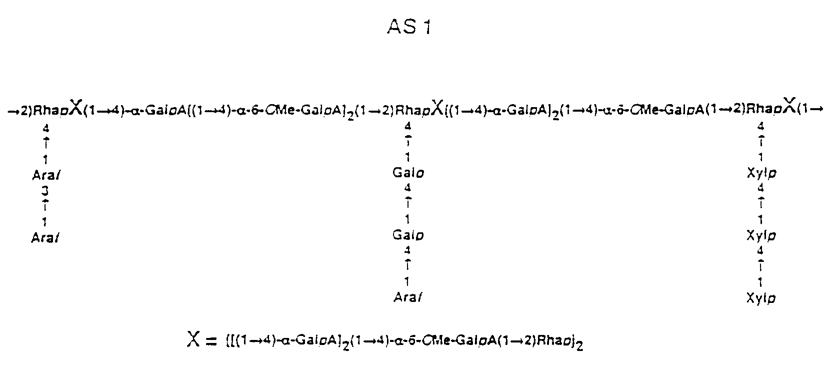 ayant un poids moléculaire moyen de 6000 D à 8000 D, déterminé dans la chromatographie par perméation du gel sous haute pression, dans lequel environ 50% des acides galacturoniques sont présents en étant estérifiés avec du méthanol et dans lequel 50% des chaînes xylane portent des radicaux terminaux d'arabinose.

2. Polysaccharide répondant à la formule générale : 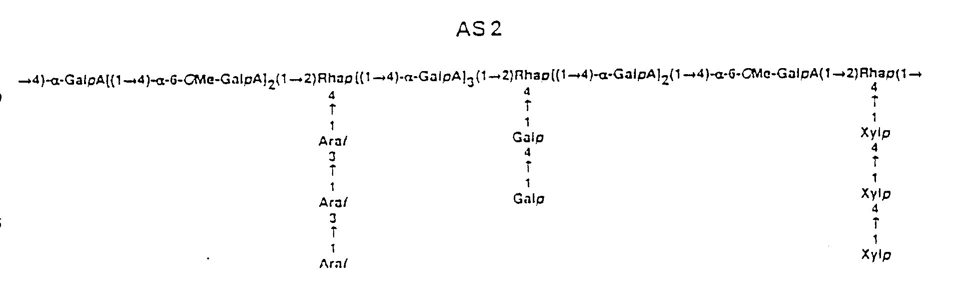 ayant un poids moléculaire moyen de 13000 D à 17000 D, détermine dans la chromatographie par perméation du gel sous haute pression, dans lequel environ 40% des groupes acides sont présents en étant estérifiés avec du méthanol.

3. Polysaccharide selon l'une quelconque des revendications 1 ou 2, caractérisé en ce qu'on l'obtient à partir de plantes de l'espèce Achyrocline, de préférence Achyrocline satureioides.

4. Préparation pharmaceutique contenant un polysaccharide selon la revendication 1 ou 2, en liaison avec des substances de support et auxiliaires habituelles connues.

5. Procédé pour l'obtention d'un polysaccharide selon l'une quelconque des revendications 1 ou 2, caractérisé en ce que :
a) on procède à une extraction préalable de parties séchées de plantes de l'espèce Achyrocline, de préférence Achyrocline sat. dans un solvant organique,
b) on fait macérer le résidu de remède dans de l'eau, on dialyse le résidu contre H₂O, et ensuite
c) on soumet à une chromatographie par échange d'anions, dans lequel on élue, par élution à gradient de sel, une fraction acide dextrogyre que l'on sépare, au moyen d'une chromatographie sur gel, en polysaccharides selon l'invention.

6. Procédé selon la revendication 5, dans lequel, à l'étape a), on utilise de l'éther de pétrole et du méthanol.

7. Procédé selon la revendication 5, dans lequel à des fins d'élution dans la chromatographie par échange d'anions, on utilise un gradient de 0 à 1 mole/l NaCl et on élue la fraction acide dextrogyre à une concentration de NaCl d'environ 0,3 mole/l NaCl.
